## Europäisches Patentamt

## European Patent Office

## Office européen des brevets

(19)

(11) Publication number: **0 085 705**
**B1**

(12) ## EUROPEAN PATENT SPECIFICATION

(45) Date of publication of patent specification: **07.10.87**

(21) Application number: **82902699.6**

(22) Date of filing: **19.07.82**

(86) International application number:
**PCT/US82/00973**

(87) International publication number:
**WO 83/00661 03.03.83 Gazette 83/06**

(51) Int. Cl.⁴: **B 60 B 25/04,** B 60 B 25/22,
B 60 C 17/04

(54) **WHEEL RIM ASSEMBLY FOR PNEUMATIC TUBELESS TYRES.**

(30) Priority: **17.08.81 US 293099**

(43) Date of publication of application:
**17.08.83 Bulletin 83/33**

(45) Publication of the grant of the patent:
**07.10.87 Bulletin 87/41**

(84) Designated Contracting States:
**CH DE FR GB LI SE**

(56) References cited:
**BE-A- 541 988**
**US-A-3 141 490**
**US-A-3 882 919**
**US-A-3 913 654**
**US-A-4 081 014**
**US-A-4 091 854**
**US-A-4 144 922**
**US-A-4 228 840**
**US-A-4 327 791**

(73) Proprietor: **MOTOR WHEEL CORPORATION**
**1600 N. Larch Street**
**Lansing, MI 48909 (US)**

(72) Inventor: **STRADER, Don S.**
**1741 Nottingham**
**Lansing, MI 48910 (US)**

(74) Representative: **Wehnert, Werner et al**
**Patentanwälte Dipl.-Ing. Hauck, Dipl.-Phys.**
**Schmitz, Dipl.-Ing. Graalfs, Dipl.-Ing. Wehnert,**
**Dipl.-Phys. Carstens, Dr.-Ing. Döring**
**Mozartstrasse 23**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a wheel rim assembly for pneumatic tubeless tires comprising rim base means including a generally cylindrical rim base, first flange means carried at one edge of said rim base, a cylindrical band at a flange-remote edge of said rim base with a diameter which is less than that of said rim base; demountable flange means including a cylindrical hoop received over said band, second flange means carried at one edge of said hoop and radially and axially inwardly facing conical surface means at a flange-remote edge of said hoop; circumferentially continuous resilient sealing means disposed between said surface means and opposing surface on said rim base means; and means for releasably clamping said demountable flange means on said rim base means with said sealing means captured in compression between said surface means and said opposing surface for normally sealing the internal cavity of a tire mounted on said wheel rim assembly.

A wheel rim assembly of this type has become known from US—A—4228840.

It has been recognized in the art that multiple-piece-wheel assemblies, e.g. as defined above, may present a significant safety hazard if it is attempted to inflate a tire mounted thereon when the various rim assembly components are improperly positioned or seated, or to disassemble the rim when the tire mounted thereon is inflated. This problem is particularly acute in the case of high pressure track tires and the like.

US—A—4144922 discloses a so-called two-piece wheel including a demountable ring segment which is slidably disposed on a cylindrical portion of the rim base to permit insertion of a locking ring into a rim base groove. The rim base segment is thereafter drawn outwardly so as to capture the locking ring, and the tire mounted thereon may then be inflated. The rim base segment includes a pair of air bleed grooves which are axially offset with respect to a rim base groove containing an O-ring. If the rim base segment is not properly positioned in the axial direction, one of the rim base segment grooves will register with the rim base groove so as to prevent the O-ring from sealing the tire cavity. However, the air bleed grooves would not bleed air from within the tire cavity prior to axial displacement of the rim base segment.

The problem to be solved by the invention is to further develop a wheel rim assembly of the type as defined in the opening paragraph such that it prevents inflation of a tire mounted on the rim assembly when the rim assembly components are improperly positioned and/or it automatically vents the tire cavity to atmosphere should disassembly be attempted when the tire mounted thereon is inflated.

To solve this problem a wheel rim assembly of the type as defined in the opening paragraph is characterized by additionally comprising air bleed passage means in said band, improper mounting of said demountable flange means on said rim base means permitting air leakage past said sealing means through said air bleed passage means to atmosphere.

Further developments of the invention are defined in the subclaims.

Brief Description of the Drawings

The invention, together with additional objects, features and advantages thereof, will be best understood from the following description, the appended claims and the accompanying drawings in which:

FIG. 1 is a sectional view of a presently preferred embodiment of the safety tire and wheel assembly provided by the invention taken in a radial plane;

FIG. 2 is a fragmentary sectional view on an enlarged scale taken;

FIG. 3 is a sectional view taken along the line 5—5 in Fig. 2; and

FIG. 4 is a view similar to that of Fig. 1 showing a modified safety tire and wheel assembly in accordance with the invention.

Detailed Description of Preferred Embodiments In the following description and claims, directional adjectives such as "inboard" and "outboard" are taken with reference to preferred orientation of mounting of the wheel, etc. on a vehicle, and no undue limitations should be inferred therefrom where such directional adjectives are not essential to operation of the structural and functional features of the invention.

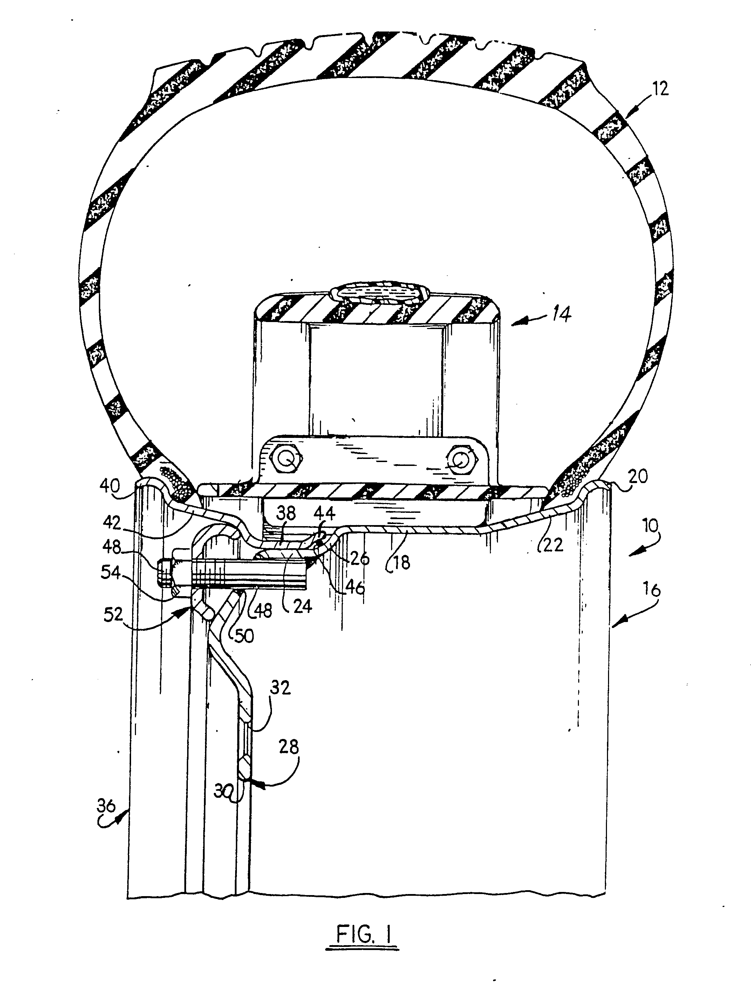

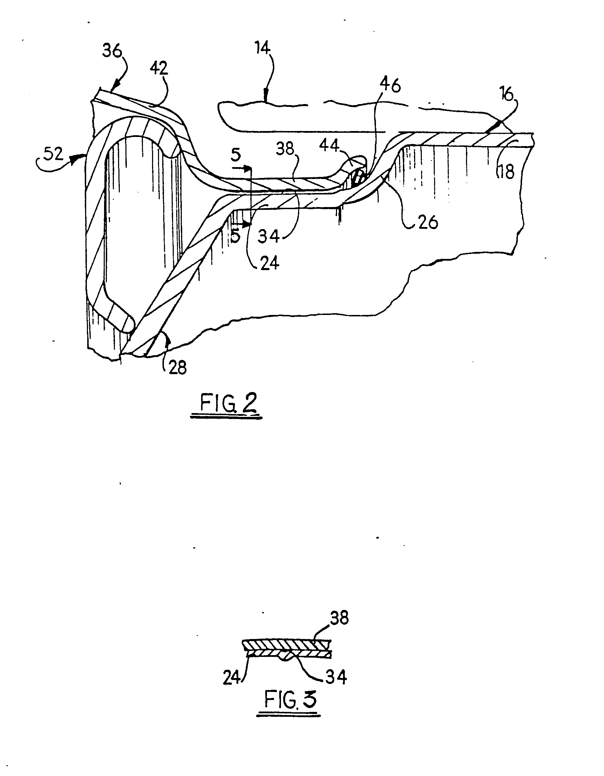

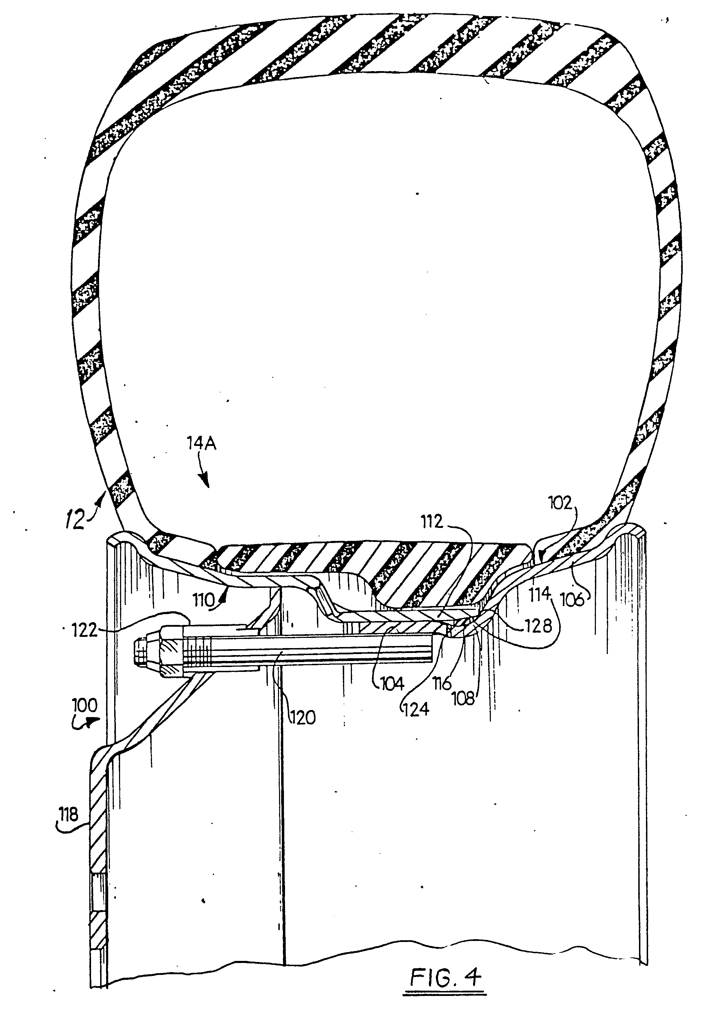

Figs. 1—4 illustrate a presently preferred embodiment of a safety tire and wheel assembly in accordance with the invention as comprising a wheel assembly 10, a tubeless pneumatic tire 12 mounted thereon and a safety insert 14 carried by wheel assembly 10 internally of tire 12 for supporting the latter in the event of tire deflation. Wheel assembly 10 includes a first rim segment 16 having a cylindrical rim base 18 and an inboard bead retaining flange 20 integrally projecting therefrom and coupled thereto by a 15° bead seat 22. A circumferentially continuous cylindrical bead 24 has a diameter which is less than that of rim base 18 and is coaxially integrally connected thereto by the radially outwardly and axially inwardly angulated shoulder 26. A circumferential array of axially extending air bleed passages or channels 34 (Figs. 2 and 3) are formed as radial depressions in the cylindrical outer surface of band 24 at a preferred spacing of substantially 45°. As best seen in Fig. 3, channels 34 extend axially throughout the cylindrical portion of band 24 but not into the angulated shoulder 26.

A wheel mounting disc generally indicated at 28 is integral with an edge of band 24 remote from flange 22, and includes hub opening 30 and stud opening 32 for mounting wheel assembly 10 on a vehicle in the usual manner. As best seen in Fig. 1, disc 28 tapers uniformly in thickness from a maximum in the region of hub opening 30 and stud opening 32 to a minimum at the outermost disc edge integral with rim segment 16. Rim segment 16 is of substantially uniform thickness throughout. Rim segment 16 with integral disc 28 may be formed in a blanking and spinning operation, followed by a forming operation in which channels 34 are stuck in rim band 24 at a spacing of 45° from each other.

Wheel assembly 10 further includes a second rim segment 36 which comprises a cylindrical hoop 38 adapted to be slidably and telescopically received over band 24, and an outboard bead retaining flange 40 integrally coupled to hoop 38 by the outboard 15° bead seat 42. A lip 44 projects axially inwardly and radially outwardly from the flange-remote edge of band 38 for sealingly capturing in assembly against shoulder 26 an annular resilient O-ring seal 46. A plurality of threaded studs 48 are affixed as by welding internally of band 24 on rim segment 16 and project axially outwardly therefrom through corresponding openings 50 (Fig. 1) in disc 28. Studs 48 are preferably spaced 45° from each other and symmetrically alternate in circumferential position with air bleed channels 34. That is, each air bleed channel 34 is struck in the forming of rim segment 16 mid-way between an associated pair of disc openings 50. An annular clamping ring 52 is received over the outboard ends of studs 48, and a plurality of locknuts 54 are received over the corresponding threaded stud ends for clamping rim segment 36 onto rim segment 16, with O-ring 46 being captured in compression between lip 44 and shoulder 26.

With the rim segments assembled as shown in Fig. 1, the internal cavity of tire 12 is sealed by O-ring 46 so that the tire may be inflated and operated in the usual manner. If clamping ring 52 and rim segment 36 are not in the fully assembled condition, or if it is attempted to disassemble rim segment 36 by removal of nuts 54 with the tire inflated, compression forces on sealing ring 46 are removed and any pressurized air within or entering the tire cavity is vented to atmosphere past the O-ring and between hoop 38 and band 24 through air bleed channels 34. It will be noted in particular in accordance with a preferred embodiment of the invention that sufficient threads extend from nuts 54 in the fully assembled positions of nuts 54 thereon that, in the event that the nuts are loosened during a disassembly operation with the tire inflated, lip 44 on rim segment 36 will move out of sealing engagement with O-ring 46 and thereby vent the tire cavity to atmosphere through air bleed passages 34 before all of the nuts 54 are removed from studs 48.

Fig. 4 illustrates a modified wheel assembly 100 in accordance with the invention as comprising an inboard rim segment 102 having a band 104 coupled to the bead seat 106 by the circumferential depression 108. The outboard rim segment 110 includes a cylindrical hoop 112 received over band 104. The radially and axially inner surface 114 of hoop 112 is frustoconical and sealingly captures an O-ring 116 in depression 108. A separate disc 118 is internally welded to outboard rim segment 110.

A circumferential array of threaded studs 120 are internally welded to band 104 and project through corresponding openings in disc 118. An insert 122 is telescopically received over each stud 120 and engages the angulated outboard face of disc 118 to provide for flush surface engagement by locknut 54 in a plane perpendicular to the stud axis (and wheel axis). The air bleed channels 34 of Figs. 2 and 3 are replaced in Fig. 4 by openings or apertures 124 extending radially through recess 108 outboard of sealing ring 116.

It will thus be appreciated that a wheel assembly has been provided in accordance with the present invention, in particular a multiple-piece rim assembly. In the embodiments disclosed, the wheel assembly includes air bleed passages (34 in Figs. 1—3, and 124 in Fig. 4) for preventing inflation of a tire mounted thereon and/or automatically deflating a tire mounted thereon when the rim segments are not properly assembled. Specifically, an O-ring (46 or 116) compressed between an inboard edge surface (44 or 114) on the demountable rim segment (36 or 110) and the opposing portion (26 or 108) on the second rim segment (16 or 102) normally seals the tire cavity. In the event that such compression is absent because the rim components are improperly assembled or tightened, or the compression forces are removed by loosening of the locknuts 54, the tire cavity is effectively vented to atmosphere through the air bleed passages.

Although the multiple-piece wheel rim and wheel of the invention are contemplated as having general utility in applications such as truck wheels where multiple-piece wheel rims of other configurations are generally utilized, it will be recognized that the multiple-piece rim of the invention has particular utility in combination with a run flat safety insert which includes a substantially incompressible portion for clamping the tire bead toes against the bead retaining flanges. This particular utility arises from the fact that the demountable rim segment 36 in the rim assembly of the invention need not be positioned axially inwardly of its final position during the assembly operation as is the case with many multiple-piece rims of conventional types. Thus, the rim assembly of the invention cooperates with a bead toe-clamping safety insert during the process of assembling the entire insert tire and wheel assembly.

Note also that the use of angulated surfaces on one or both of the rim segments for engaging the sealing ring provides accommodation for substantial variation within manufacturing tolerances on the wheel, insert and tire components. In Fig. 2, the separation at 126 illustrates the point of minimum O-ring compression, corresponding to a maximum distance between bead flanges 20, 40 (Fig. 1). On the other hand, axial abutment of rim segments at 128 (Fig. 4) illustrates the point of minimum spacing between bead flanges.

### Claims

1. A wheel rim assembly (10 or 100) for pneumatic tubeless tires comprising rim base means (16, 102) including a generally cylindrical rim base (18), first flange means (20) carried at one edge of said rim base (18), a cylindrical band (24, 104) at a flange-remote edge of said rim base with a diameter which is less than that of said rim base (18); demountable flange means (36, 110) including a cylindrical hoop (38, 112) received over said band (24, 104), second flange means (40) carried at one edge of said hoop and radially and axially inwardly facing conical surface means (44, 114) at a flange-remote edge of said hoop; circumferentially continuous resilient sealing means (46, 116) disposed between said surface means (44, 114) and opposing surface (26, 108) on said rim base means; and means (48—54, 120—122) for releasably clamping said demountable flange means (36, 110) on said rim base means with said sealing means captured in compression between said surface means and said opposing surface (26, 108) for normally sealing the internal cavity of a tire (12) mounted on said wheel rim assembly; characterized by additionally comprising air bleed passage means (34, 124) in said band (24, 104), improper mounting of said demountable flange means (36, 110) on said rim base means permitting air leakage past said sealing means (46, 116) through said air bleed passage means to atmosphere.

2. The wheel rim assembly (10 or 100) set forth in claim 1 wherein said clamping means comprises first threaded means (48, 120) carried by said rim base means and means including second threaded means (54) adapted to be received by said first thread means, characterized in that said first and second threaded means being dimensioned in the axial direction of said rim base means sufficiently to permit loss of sealing engagement at said sealing means prior to loss of threaded engagement at said threaded means upon loosening of said threaded means.

3. The wheel rim assembly (10 or 100) set forth in claim 2 wherein said first threaded means comprises a plurality of threaded studs (48, 120) affixed in a circumferential array to said band, and wherein said second threaded means comprises a plurality of nuts (54) received onto said studs, characterized in that the threaded length of said studs being such as to permit loss of sealing at said sealing means before said nuts are removed from said studs.

4. The wheel rim assembly (10) set forth in any preceding claim characterized in that said air bleed passage means comprises at least one channel (34) extending in the axial direction in the radially outer face of said band.

5. The wheel rim assembly (100) set forth in any preceding claim 1—3 characterized in that said air bleed passage means comprises at least one radial opening (124) extending through said band.

6. The wheel rim assembly (10) set forth in any preceding claim further comprising wheel mounting disc (28) integral with said band (24).

### Patentansprüche

1. Radfelgenanordnung (10 oder 100) für pneumatische schlauchlose Reifen, mit Felgenbettmitteln (16, 102), die ein im wesentlichen zylindrisches Felgenbett (18) umfassen, ersten Flanschmitteln (20), die von einem Rand des Felgenbettes (18) getragen werden, einem zylindrischen Band (24, 104) an einem flanschentfernten Rand des Felgenbettes mit einem Durchmesser, der kleiner ist als der des Felgenbettes (18), abnehmbaren Flanschmitteln (36, 110), die einen zylindrischen Ring (38, 112) umfassen, der über dem Band (24, 104) sitzt, zweiten Flanschmitteln (40), die einen über dem Band (24, 104) sitzenden zylindrischen Reifen (38, 112), von einem Rand des Reifens getragene zweite Flanschmittel (40) und radial sowie axial einwärts gerichtete konische Flächen (44, 114) an einem flanschentfernten Rand des Rings umfassen, in Umfangsrichtung kontinuierlichen, elastischen Dichtungsmitteln (46, 116), die zwischen den besagten Flächen (44, 114) und einer gegenüberliegenden Fläche (26, 108) an den Felgenbettmitteln angeordnet sind, und Mitteln (48—54, 120—122) zum lösbaren Festspannen der abnehmbaren Flanschmittel (36, 110) an den Felgenbettmitteln, wobei die Dichtmittel unter Kompression zwischen der besagten Fläche und der gegenüberliegenden Fläche (26, 108) eingespannt sind, um den Innenraum eines auf der Radfelgenanordnung montierten Reifens (12) abzudichten, dadurch gekennzeichnet, daß zusätzlich Luftablaßkanalmittel (34, 124) in dem Band (24, 104) vorgesehen sind, so daß bei nicht korrekter Montage der abnehmbaren Flanschmittel (36, 110) an den Felgenbettmitteln Luft an den Dichtmitteln (46, 116) vorbei durch die Luftablaßkanalmittel zur Atmosphäre entweichen kann.

2. Radfelgenanordnung (10 oder 100) nach Anspruch 1, bei der die Spannmittel von den Felgenbettmitteln getragene erste Gewindemittel (48, 120) und zweite Gewindemittel (54) zur Aufnahme der ersten Gewindemittel aufweisen, dadurch gekennzeichnet, daß die ersten und zweiten Gewindemittel in axialer Richtung der Felgenbettmittel ausreichend dimensioniert sind, damit die Dichtungsanlage an den Dichtmitteln verlorengehen kann, ehe der Gewindeeingriff an den Gewindemitteln bei Lösen der Gewindemittel verlorengeht.

3. Radfelgenanordnung (10 oder 100) nach Anspruch 2, bei der die ersten Gewindemittel aus mehreren Gewindebolzen (48, 120) bestehen, die in Umfangsrichtung verteilt an dem Band befestigt sind, und bei der die zweiten Gewindemittel aus mehreren Muttern (54) bestehen, die auf den Bolzen sitzen, dadurch gekennzeichnet, daß die Gewindelänge der Bolzen derart ist, daß die Abdichtung an den Dichtmitteln verlorengeht, ehe die Muttern von den Bolzen entfernt sind.

4. Radfelgenanordnung (10) nach einem der vorhergehenden Ansprüche, dadurch gekennzeichnet, daß die Luftablaßkanalmittel aus mindestens einem Kanal (34) bestehen, der in axialer Richtung in der radial äußeren Fläche des Bandes verläuft.

5. Radfelgenanordnung (100) nach einem der Ansprüche 1—3, dadurch gekennzeichnet, daß die Luftablaßkanalmittel aus mindestens einer radialen Öffnung (124) bestehen, die sich durch das Band hindurcherstreckt.

6. Radfelgenanordnung (10) nach einem der vorhergehenden Ansprüche, die ferner eine mit dem band (24) einstückig ausgebildete Radbefestigungsscheibe (28) aufweist.

**Revendications**

1. Jante (10 ou 100) de roue pour pneumatique sans chambre, comprenant un dispositif (16, 102) à base de jante comprenant une base (18) de jante de forme générale cylindrique, une première joue (20) portée par un bord de la base (18), une bande cylindrique (24, 104) placée au bord de la base qui est distant de la joue, la bande ayant un diamètre inférieur à celui de la base (18), une joue démontable (36, 110) ayant un cercle (38, 112) de forme cylindrique logé sur la bande (24, 104), une seconde joue (40) disposée à un bord du cercle et un dispositif (44, 114) formant une surface conique tournée vers l'intérieur radialement et axialement à un bord du cercle qui est distant de la joue, un dispositif élastique (46, 116) d'étanchéité, continu en direction circonférentielle et placé entre le dispositif (44, 114) délimitant une surface conique et la surface en regard (26, 108) du dispositif à base de jante, et un dispositif (48—54, 120—122) destiné à serrer temporairement la joue démontable (36, 110) sur le dispositif à base de jante alors que le dispositif d'étanchéité est maintenu en compression entre le dispositif délimitant une surface conique et la surface en regard (26, 108) afin que la cavité interne d'un pneumatique (12) monté sur la jante soit normalement fermée de manière étanche,

caractérisée en ce qu'elle comporte en outre un passage (34, 124) d'évacuation d'air formé dans la bande (24, 104), un montage non convenable de la joue démontable (36, 110) sur le dispositif à base de jante permettant des fuites d'air au-delà du dispositif d'étanchéité (46, 116) par le passage d'évacuation d'air vers l'atmosphère.

2. Jante (10 ou 100) pour roue selon la revendication 1, dans laquelle le dispositif de serrage comporte un premier dispositif (48, 120) muni d'un filetage porté par le dispositif à base de jante et un dispositif comprenant un second dispositif (54) à filetage destiné à coopérer avec le premier dispositif à filetage, caractérisée en ce que le premier et le second dispositif à filetage ont, dans la direction axiale du dispositif à base de jante, des dimensions suffisantes pour que la coopération étanche au niveau du dispositif d'étanchéité puisse disparaître avant interruption de la coopération par vissage des dispositifs à filetage lors qu desserrage de ces dispositifs à filetage.

3. Jante (10 ou 100) pour roue selon la revendication 2, dans laquelle le premier dispositif à filetage comporte plusieurs goujons filetés (48, 120) fixés à la bande avec un arrangement circonférentiel, et dans laquelle le second dispositif à filetage comporte plusieurs écrous (54) disposés sur le goujons, caractérisée en ce que la longueur filetée des goujons est telle que la coopération étanche au niveau du dispositif d'étanchéité puisse disparaître avant enlèvement des écrous des goujons.

4. Jante (10) pour roue selon l'une quelconque des revendications précédentes, caractérisée en ce que le passage d'évacuation d'air comporte au moins un canal (34) disposé en direction axiale dans la face radialement externe de la bande.

5. Jante (100) pour roue selon l'une quelconque des revendications 1 à 3, caractérisée en ce que le passage d'évacuation d'air comporte au moins une ouverture radiale (124) traversant la bande.

6. Jante (10) pour roue selon l'une quelconque des revendications précédentes, comprenant en outre un disque (28) de montage de roue solidaire de la bande (24).

FIG. I

FIG. 2

FIG. 3

FIG. 4